Europäisches Patentamt

European Patent Office

Office européen des brevets

(11) Veröffentlichungsnummer: **0 361 179**

**A2**

(12) ## EUROPÄISCHE PATENTANMELDUNG

(21) Anmeldenummer: 89116653.0

(22) Anmeldetag: 08.09.89

(51) Int. Cl.⁵· **B23Q 7/14 , B23Q 16/00**

(30) Priorität: 29.09.88 CH 3618/88

(43) Veröffentlichungstag der Anmeldung:
04.04.90 Patentblatt 90/14

(84) Benannte Vertragsstaaten:
AT CH DE FR GB IT LI SE

(71) Anmelder: **JD-Technologie AG**
**c/o Gestinor Services AG Chamerstrasse 50**
**CH-6300 Zug(CH)**

(72) Erfinder: **Feldmann, Hans-Ueli**
**Paul Jenni-Strasse 3**
**D-2553 Safnern(DE)**
Erfinder: **Heiz, Ueli**
**Brunnadernstrasse 89**
**CH-3006 Bern(CH)**

(74) Vertreter: **Blum, Rudolf Emil Ernst et al**
**c/o E. Blum & Co Patentanwälte Vorderberg**
**11**
**CH-8044 Zürich(CH)**

(54) **Positioniervorrichtung zur massgenauen Uebergabe von Werkstücken zwischen einem Transportfahrzeug und einer ortsfesten Einrichtung.**

(57) Zum präzisen Andocken eines Transportfahrzeugs (1) an eine ortsfeste Einrichtung (20) ist auf dem Unterteil des Transportfahrzeugs (1) ein Tragelement (2) abgestützt. Dieses ist auf dem Unterteil in Richtung gegen die ortsfeste Einrichtung (20) hin ausfahrbar. Es weist an seiner in der Ausfahrrichtung vorderen Seite eine Positionieranordnung (3) auf, mittels welcher es beim Ausfahren an seiner Vorderseite auf ein durch die ortsfeste Einrichtung (20) bestimmtes Niveau (9) anhebbar und in seiner Lage bezüglich dieser Einrichtung ausrichtbar ist. Mittels einer Nivelliervorrichtung (38) kann das Tragelement (2) in Horizontallage gebracht werden.

Fig. 1

Fig. 2

## Positioniervorrichtung zur massgenauen Uebergabe von Werkstücken zwischen einem Transportfahrzeug und einer ortsfesten Einrichtung

Die Erfindung betrifft eine Positioniervorrichtung zur massgenauen Uebergabe von Werkstücken. mit einem Transportfahrzeug, das ein zu positionierendes Tragelement besitzt und mit einer ortsfesten Einrichtung, mit welcher das Tragelement zur Positionierung zusammenwirkt, wobei das Tragelement auf einem Unterteil des Transportfahrzeugs abgestützt und darauf in Richtung gegen die ortsfeste Einrichtung hin ausfahrbar ist und wobei das Tragelement an seiner in der Ausfahrrichtung vorderen Seite eine Positionieranordnung aufweist, mittels welcher es beim Ausfahren an seiner Vorderseite in seiner Lage bezüglich der ortsfesten Einrichtung ausrichtbar ist.

Positioniervorrichtungen dieser Art sind z.B. aus den japanischen Publikationen Nr. 55-77655 bzw. Nr. 57-201999 bekannt.

Moderne computergesteuerte Werkzeugmaschinen. sogenannte flexible Bearbeitungszentren, werden durch Transport- und Lager-Systeme mit den zu bearbeitenden Werkstücken und den dazu nötigen Werkzeugen versorgt.

Wegen ihrer grossen Anpassungsfähigkeit und Ausfallsicherheit werden heute dazu meistens fahrerlose, induktivgeführte Transportfahrzeuge eingesetzt. Diese können alle Uebergabestationen der Bearbeitungszentren sowie die Rüststationen, Pufferplätze usw. mit einer Genauigkeit von ca. + - 10 mm anfahren.

Diese Anfahrgenauigkeit reicht indessen für eine massgenaue Uebergbe der Werkstücke nicht aus. Vielmehr wird eine Positioniergenauigkeit in der Grössenordnung von ca. + - 0,5 mm angestrebt.

Ferner ist vor der Uebergabe des Werkstücks eine exakte Ausnivellierung desselben bezüglich der ortsfesten Einrichtung notwendig. Die beiden vorerwähnten japanischen Publikationen zeigen indessen nicht. auf welche Weise eine Nivellierung erfolgen kann.

Bei weiteren bekannten Positioniervorrichtungen. wie sie z.B. in der DE-A-33 45 877 oder den internationalen Veröffentlichungen WO 86/03179 und WO 86/02057 beschrieben sind, wird die Positionierung dadurch erreicht, dass die Fahrzeuge mit angehobenem Tragelement in eine ortsfeste Uebergabestation einfahren, welche vom Tragelement seitlich überragt wird. Das Tragelement wird danach abgesenkt. zentriert sich durch sein Eigengewicht bezüglich der ortsfesten Uebergabestation und wird schliesslich ausnivelliert.

Ein wesentlicher Nachteil besteht dabei im relativ langsamen Andockvorgang, der bei den bekannten Vorrichtungen zweischrittig erfolgt, indem nach dem Absenken meist ein teilweises Wiederanheben zur Nivellierung des Tragelements in die Horizontalebene nötig ist. Der entsprechende Zeitverlust macht sich direkt in geringerer Produktivität bemerkbar, wobei er sich beim Anfahren mehrerer Arbeitsstationen entsprechend vervielfacht.

Ein weiterer Nachteil dieser Vorrichtungen besteht darin, dass Fahrzeugteile und Teile der Uebergabestation sich beim Anfahren seitlich "verzahnen". d.h. dass zwischen Fahrzeug und Uebergabestation kein durchgehender seitlicher Freiraum oder Abstand freigehalten wird. Dies kann zu Sicherheitsproblemen führen und schliesst die Möglichkeit von Kollisionen zwischen Fahrzeug und Uebergabestation ein.

Es stellt sich damit die Aufgabe, eine Andockbzw. Positioniervorrichtung der erwähnten Art so auszugestalten, dass eine hochpräzise und dennoch rasche Uebergabe von Werkstücken zwischen Transportfahrzeug und ortsfester Einrichtung ermöglicht wird.

Dies wird erfindungsgemäss durch die im Patentanspruch 1 erwähnten Merkmale erreicht.

Da das Tragelement erst nach dem Anfahren der ortsfesten Einrichtung ausgefahren wird, bleibt beim Anfahren ein seitlicher Sicherheitsabstand bestehen. Das seitliche Ausfahren des Tragelements erfolgt gleichzeitig mit einer Justierung in die Horizontalebene, d.h. der Nivellierung, so dass der Uebergabevorgang wesentlich beschleunigt wird. Durch das seitliche Ausfahren-wird ferner der Abstand zwischen Palette und Uebergabestation schon während dem Andocken aufgehoben, indem die Palette dabei zusammen mit dem Tragelement an die Uebergabestation angenähert wird.

Der Uebergabevorgang kann vorzugsweise nach zwei Seiten hin erfolgen, so dass die ortsfesten Einrichtungen der Uebergabestation beidseitig dem Pfad der führerlosen Transportfahrzeuge angeordnet sein können.

Nachfolgend werden Ausführungsbeispiele der Erfindung anhand der Figuren näher erläutert: Darin zeigen:

Fig. 1 bis 3 die erfindungsgemässe Vorrichtung in schematischer Darstellung in verschiedenen Phasen des Andockens,

Fig. 4 und 5 eine weitere Ausführung der erfindungsgemässen Vorrichtung in schematischer Darstellung in verschiedenen Phasen des Andockens,

Fig. 6 ein Ausführungsbeispiel der Erfindung in einer teilweise geschnittenen Ansicht in Fahrrichtung des Transportfahrzeugs,

Fig. 7 das Ausführungsbeispiel gemäss Fig.

6 in einer teilweise geschnittenen Ansicht quer zur Fahrrichtung des Transportfahrzeugs,

Fig. 8 und 9 Ansichten von Teilen der ortsfesten Einrichtungen,

Fig. 10 und 11 eine Variante der ortsfesten Einrichtung in Aufsicht und Schnittansicht,

Fig. 12 bis 14 Ansichten einer weiteren Variante von Positionieranordnung und ortsfester Einrichtung, sowie

Fig. 15 und 16 ein Ausführungsbeispiel mit Schienenführung in Aufsicht und Seitenansicht.

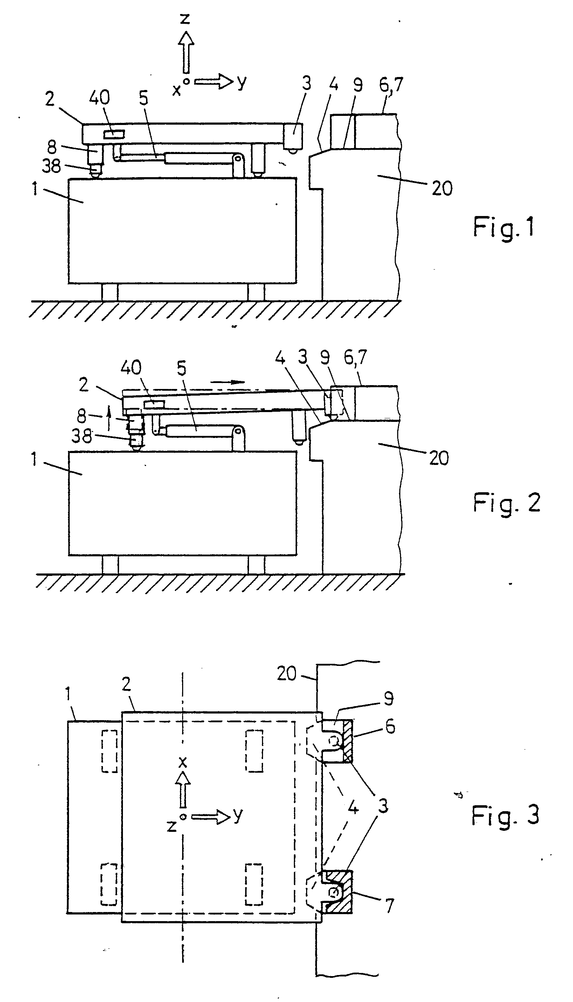

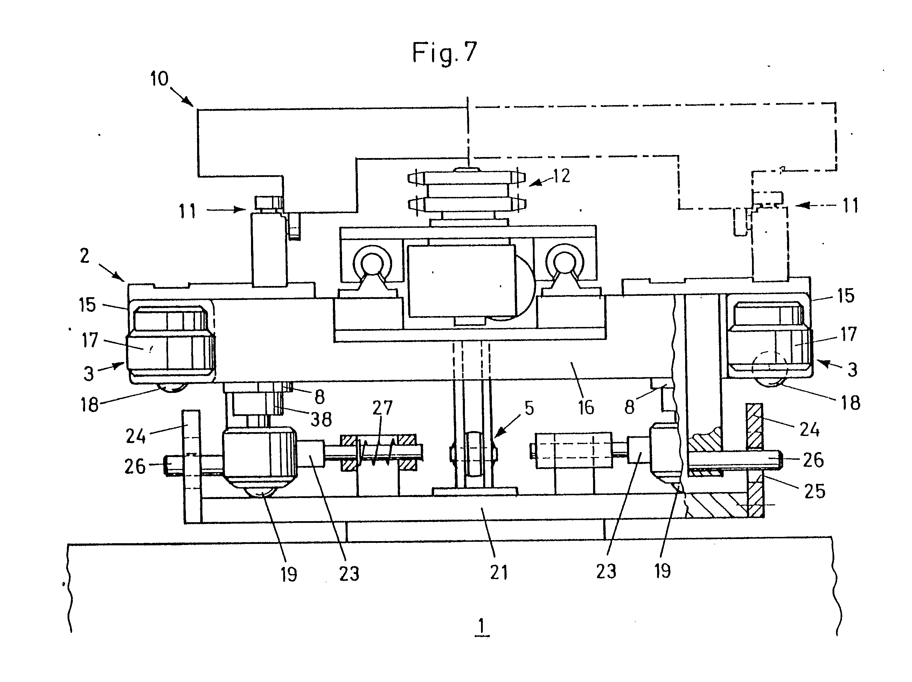

Anhand der Figuren 1 bis 3 wird zunächst das Funktionsprinzip der erfindungsgemässen Vorrichtung schematisch erläutert. Die Fig. 1 und 2 zeigen ein Transportfahrzeug 1, gesehen in Fahrtrichtung, das neben einer ortsfesten Uebergabestation 20 angehalten hat. Die Position des Fahrzeugs 1 bezüglich der ortsfesten Uebergabestation 20 ist dann bis auf ca. +-10 mm gegeben. Auf dem Fahrzugunterteil ist ein Tragelement 2 abgestützt, auf welchem eine Palette 10 (vgl. Fig. 7) mit dem Werkstück angeordnet sein kann. In den Figuren 1 bis 3 ist diese Palette der Einfachheit halber nicht dargestellt. Nach dem Anhalten kann das Tragelement 2 mittels einem Zylinder 5 gegen die ortsfeste Uebergabestation 20 hin seitlich ausgefahren werden. An der ortsfesten Uebergabestation 20 sind Führungen 4 in der Form von Auflaufschrägen angeordnet. Das Tragelement 2 besitzt an seiner Vorderseite zwei Führungselemente 3, welche nun beim Ausfahren über diese Auflaufschrägen laufen und das Tragelement 2 dadurch einseitig anheben. Gleichzeitig damit wird das Tragelement 2 vom Unterteil des Fahrzeugs 1 teilweise abgehoben und auch auf seiner hinteren Seite mittels einer Nivelliervorrichtung 38 angehoben, die das Tragelement 2 horizontal ausrichtet. Die Nivelliervorrichtung wird durch einen Lagesensor 40, vorzugsweise ein elektronisches Pendel, gesteuert.

Das seitliche Ausfahren über die Führungselemente 3 erfolgt bis zum Anstehen des Tragelements 2 an einem Anschlag 6 und einem Zentrierelement 7, welche Teil der ortsfesten Einrichtung sind. Dadurch werden gemäss der in Fig. 3 dargestellten Aufsicht auf das Fahrzeug die Freiheitsgerade x,y und der Winkel um die y- und die z-Achse festgelegt. Durch die Wirkung der Nivelliervorrichtung 38 werden zugleich der Freiheitsgrad z sowie die Winkel um die x-Achse festgelegt, so dass insgesamt sämtliche translatorischen und rotatorischen Freiheitsgrade bestimmt sind. Um die beschriebene Positionierung ausführen zu können, ist das Tragelement 2 auch quer zu seiner Ausfahrrichtung bezüglich dem Fahrzeugunterteil geringfügig verschiebbar. In ausgefahrener und positionierter Lage wird hernach die Palette 10 auf Führungen 11 mit einer Verschiebeeinheit 12 (Fig. 7) auf die ortsfeste Uebernahmevorrichtung übergeben. Nach der Uebergabe wird das Tragelement 2 auf das Fahrzeug zurückgezogen und dort durch die Wirkung des Zylinders 5 und von Führungsorganen positioniert. Das Fahrzeug 1 ist damit wieder abfahrbereit. Die Uebernahme einer Palette an einer ortsfesten Uebergabestation erfolgt auf dieselbe Weise. Das Tragelement wird dabei leer ausgefahren, erfasst mit seiner Verschiebeeinheit 12 eine Palette 10 und wird nach deren Aufnahme wieder eingefahren.

Wie aus diesen Erläuterungen ersichtlich ist, können der Ausfahrvorgang und die Positionierung im wesentlichen gleichzeitig ablaufen, wobei das Tragelement 2 beim seitlichen Ausfahren in den ortsfesten Einrichtungen der Uebergabestation ausgerichtet und durch die Nivelliervorrichtung 38 in die Horizontalebene gebracht wird. Dabei nähert sich das Tragelement 2 zugleich der Uebergabestation an und schliesst die Lücke zu deren Einrichtungen für die Palettenübernahme.

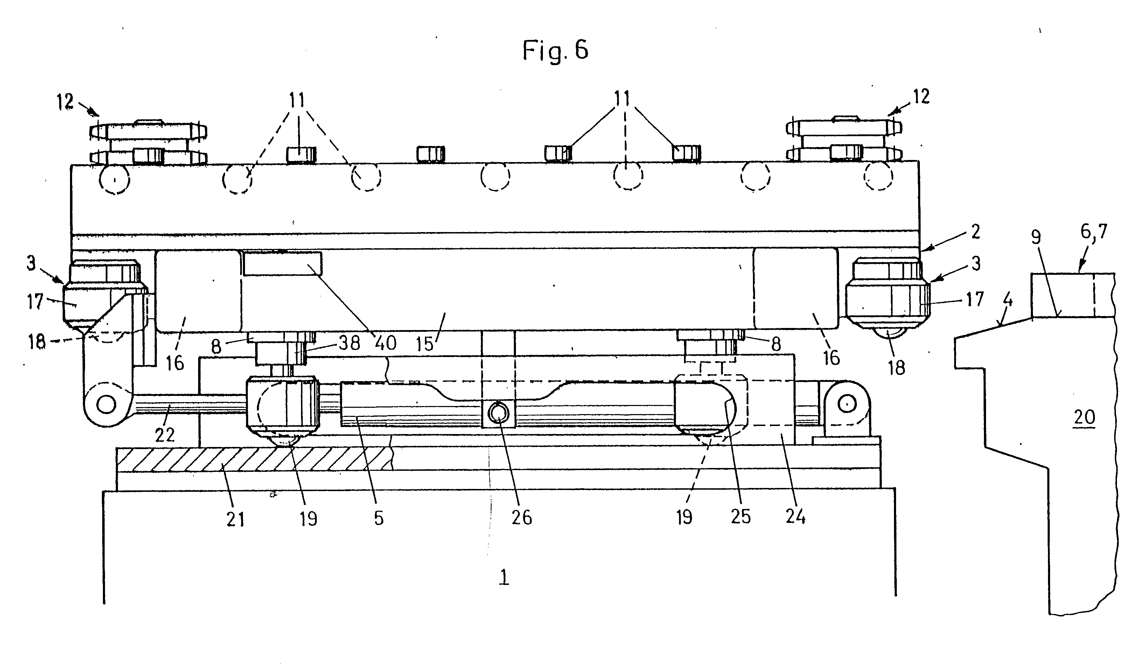

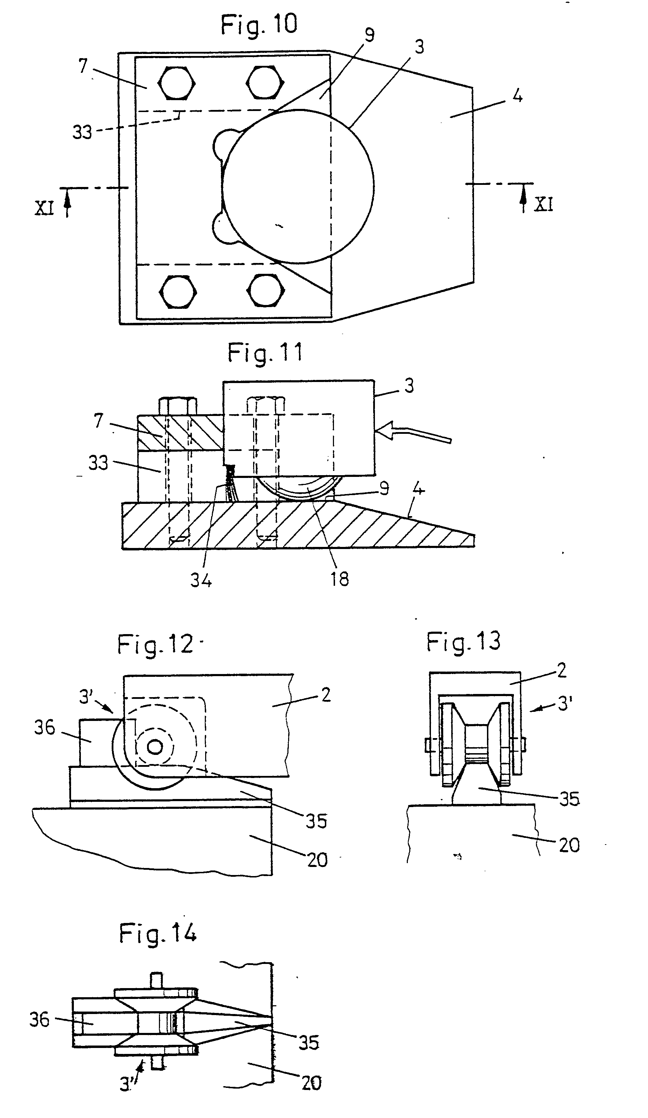

In den Fig. 6 bis 9 ist ein praktisches Ausführungsbeispiel der bisher lediglich schematisch dargestellten Erfindung gezeigt. Entsprechende Elemente tragen darin die bisher schon verwendeten Bezugsziffern. Die Ansicht von Fig. 6 zeigt das Tragelement 2 auf dem nur angedeuteten Fahrzeugunterteil 1, gesehen aus der Fahrtrichtung des Fahrzeugs. Auf der rechten Seite ist eine Uebergabestation 20 angedeutet. Es sei jedoch hervorgehoben, dass die gezeigte Vorrichtung beidseitig arbeitet, d.h. dass die Uebergabestation 20 ebenso gut auch auf der linken Seite des Fahrzeugs angeordnet sein kann. Fig. 7 zeigt eine Ansicht quer zur Fahrtrichtung des Fahrzeugs 1 bzw. in Ausfahrrichtung des Tragelements 2. Wie aus diesen Figuren ersichtlich ist, besitzt das Tragelement 2 einen Rahmen 15,16 aus Hohlprofilen, an dessen Ecken je ein Führungselement 3 angeordnet ist. Die Führungselemente 3 besitzen ein zylindrisches Gehäuse 17, in welchem drehbar je eine Kugel 18 gelagert ist. Die Kugeln 18 wirken auf der jeweils aktiven Seite als Kugelrollen mit den Auflaufschrägen 4 der ortsfesten Einrichtung 20 zusammen und stützen sich beim Ausfahr- und Positioniervorgang auf diese ab. Die zylindrischen Gehäuse 17 dienen als Positionierorgane für das Tragelement 2 und wirken mit dem erwähnten Anschlag 6 bzw. Zentrierelement 7 der ortsfesten Einrichtung 20 zusammen, wie aus den Fig. 8 und 9 ersichtlich ist.

Das Tragelement 2 ist über vier Stützen 8 auf dem Fahrzeugunterteil 1 abgestützt. Nivellierzylinder 38 an den Stützen 8 bilden die Nivelliervorrichtungen, welche auf der jeweiligen Rückseite des Tragelements 2, d.h. in Fig. 6 auf der linken Seite aktiv werden. Unten an den Stützen 8 sind Kugelrollen 19 angeordnet, auf welchen das Traglement 2 bezüglich einer Plattform 21 verschiebbar ist, die auf dem Fahrzeugunterteil fest montiert ist. Der Antrieb für die Ausfahrbewegung erfolgt durch den Hydraulikzylinder 5, der gelenkig mit dem Fahrzeugunterteil 1 und dessen Schubstange 22 (Fig. 6) ebenfalls gelenkig mit dem Rahmen des Tragelements 2 verbunden ist. Beim Ausfahren rollen zunächst alle vier Kugelrollen 19 auf der Plattform 21, wobei die jeweils vorderen bei Kontakt der Führungselemente 3 mit den Auflaufschrängen 4 abheben und die beiden hinteren Kugelrollen 19 als Abstützung für die Nivellierzylinder 38 auf der Plattform 21 verbleiben.

Damit die Bewegungen des Tragelements 2 bezüglich der Plattform 21 innerhalb eines zulässigen Toleranzbereichs erfolgen, sind zur Halterung des Tragelements 2 während der Fahrt und beim seitlichen Ausfahren auf der Plattform 21 Zentrierleisten 23 angeordnet. Diese Zentrierleisten 23 sind lediglich in Fig. 7 gezeigt, während sie in Fig. 6 der Uebersichtlichkeit halber nicht gezeichnet sind. Sie erstrecken sich in Ausfahrrichtung und sind quer zur Ausfahrrichtung gefedert. Die Federn 27 sind so angeordnet, dass jeweils nur eine Seite des Tragelements 2 gedrückt wird. Befindet sich das Tragelement in seiner korrekten Mittenlage, drückt keine Feder bzw. Zentrierleiste dagegen. Das Tragelement bleibt auch während dem seitlichen Ausfahren in dieser Weise geführt, bis es sich mit seinen Führungselementen 3 in der ortsfesten Einrichtung 20 positioniert. Die Zentrierleisten 23 bewirken dabei eine "Vorzentrierung", indem sich zu den Fahrtoleranzen keine weiteren Toleranzen der Lage des Tragelements 2 bezüglich des Fahrzeugunterteils addieren.

Parallel dazu sind äussere Halteschienen 24 mit Führungsschlitzen 25 angeordnet, in welche Dorne 26, die mit dem Tragelement 2 verbunden sind, eingreifen. Wie insbesondere aus Fig. 6 ersichtlich ist, wird das Tragelement 2 dadurch gegen die Plattform 21 niedergehalten, falls es nicht seitlich ausgefahren wird.

Auf dem Tragelement 2 ist in Fig. 7 die Verschiebeeinheit 12 für Paletten 10 erkennbar. Dabei handelt es sich beim gezeigten Ausführungsbeispiel um einen Kettenförderer bekannter Bauart, der unten an den

Paletten 10 angreift und diese längs den Führungen 11 verschiebt. Da es sich um ein wohlbekanntes Element handelt, wird hier auf eine nähere Beschreibung verzichtet.

Wie sich ebenfalls aus Figur 7 ergibt, können die Führungen 11 versetzt werden, um an verschiedene, gängige Palettentypen angepasst zu werden. In der linken Hälfte von Fig. 7 ist eine relativ schmale Palette 10 angedeutet, während in der rechten Hälfte dieser Figur die Führung 11 für eine breitere Palette nach aussen versetzt ist.

Der Uebergabevorgang läuft bei dieser Vorrichtung auf die gleiche Art ab, wie im Zusammenhang mit den Figuren 1 bis 3 erläutert wurde, kann jedoch beidseitig der Fahrtrichtung erfolgen. Die Positionierung selbst geschieht jeweils dadurch, dass die Führungselemente 3 mit ihren zylindrischen Aussenflächen 17 einerseits an den Anschlag 6 anstossen und anderseits in den Zentrierkonus 7 einlaufen, wie in Fig. 8 und 9 schematisch gezeigt ist. Dadurch erfolgt die Positionierung in x- und y-Richtung, sowie im Winkel um die z-Achse, wie bereits erläutert wurde.

In den Figuren 10 und 11 ist eine Abwandlung des beschriebenen Zentrierkonus 7 (bzw. des Anschlags 6) der ortsfesten Einrichtung gezeigt, welche besonders geeignet ist zur Installation in der Nähe von Bearbeitungsmaschinen. Dort besteht die Gefahr, dass sich im Bereich der ortsfesten Einrichtung Materialspäne ansammeln können, welche die Positioniergenauigkeit beeinträchtigen. Hierfür weist der Zentrierkonus eine hintere Oeffnung 33 auf, die dem Abfluss allenfalls vorhandener Späne dient. Wie in Fig. 11 angedeutet ist, können die Führungselemente 3 an der Tragplatte 2 mit einer Abstreifbürste 34 versehen sein, welche die höhennivellierte Auflage 9 von Spänen reinigt.

Ein weiteres Ausführungsbeispiel für die ortsfeste Einrichtung 20 und die Führungselemente ist in den Fig. 12 bis 14 in verschiedenen Ansichten dargestellt. Die Führungselemente 3' an der Tragplatte 2 sind als zwei Schienenräder ausgebildet, die mit je einer konisch-prismatischen Schiene 35 mit Endanschlag 36 an der ortsfesten Einrichtung zusammenwirken. Die Schienen 35 bilden zugleich die Auflaufschräge, die nivellierte Auflage und eine Positionierung in der x-Richtung. Der Vorteil dieser Anordnung liegt darin, dass die konisch-prismatischen Schienen 35 praktisch keine Horizontalfläche bilden, auf welcher sich Bearbeitungsspäne ablagern könnten. Ferner erfolgt die Positionierung in der x-Richtung allein durch die Schwerkraft und schon beim seitlichen Ausfahren des Tragelements 2.

Die bisher beschriebenen Ausführungen der Erfindung beruhen darauf, dass jede Bearbeitungsstation einzeln angefahren wird und jedesmal eine vollständig neue Positionierung an der betreffenden, ortsfesten Einrichtung erfolgt. Nachfolgend werden nun weitere Ausführungsvarianten der Erfindung erläutert, bei denen die einmal erfolgte Positionierung für mehrere Bearbeitungseinheiten teilweise beibehalten wird. Die Tragplatte 2 erhält dabei die Funktion eines Verschiebewagens.

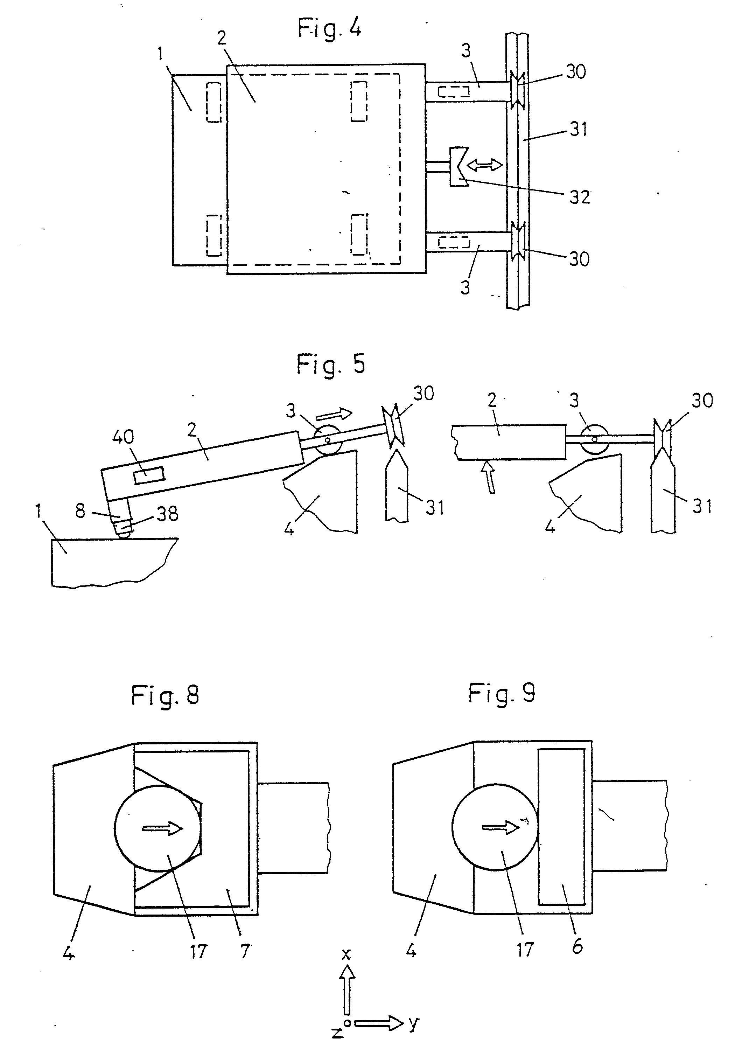

In den Fig. 4 und 5 ist schematisch eine erste, solche Ausführung der erfindungsgemässen Vorrichtung gezeigt. An der Tragplatte 2 werden zusätzlich zwei Führungsrollen 30 angeordnet, deren Achsen rechtwinkelig zur Fahrtrichtung des Fahrzeugs 1 stehen. Diese Rollen 30 können nach dem Aufschieben der Tragplatte 2 über die Auflaufschrägen 4 und dem Ausnivellieren mit der Nivelliervorrichtung 8 auf eine Schiene 31 aufsetzen, wie in Fig. 5 dargestellt ist, wobei die Führungselemente 3 der Tragplatte freigegeben werden. Dadurch bildet das Fahrzeug 1 zusammen mit der Schiene 31 der ortsfesten Einrichtung einen teilweise schienengeführten Verschiebewagen. Mehrere Uebergabestationen 20 werden längs der Schiene 31 angeordnet. Das Fahrzeug 1 bewegt sich dann mit schienengeführter Tragplatte 2 zwischen diesen Stationen 20. Der jeweils verbleibende Freiheitsgrad wird nicht mehr mit einem Anschlag 6 bzw. einem Zentrierelement 7 aufgenommen, sondern über einen beweglichen Konus 32, der an jeder Uebergabestation 20 mit einem entsprechenden Gegenstück zusammenwirkt. Die Andockvorgänge längs einer solchen schienengeführten Strecke beschleunigen sich entsprechend, indem jeweils wesentlich weniger Freiheitsgrade auszurichten sind. Am Ende der schienengeführten Strecke werden die Rollen 30 von der Schiene 31 abgehoben und die Tragplatte 2 wird freigegeben.

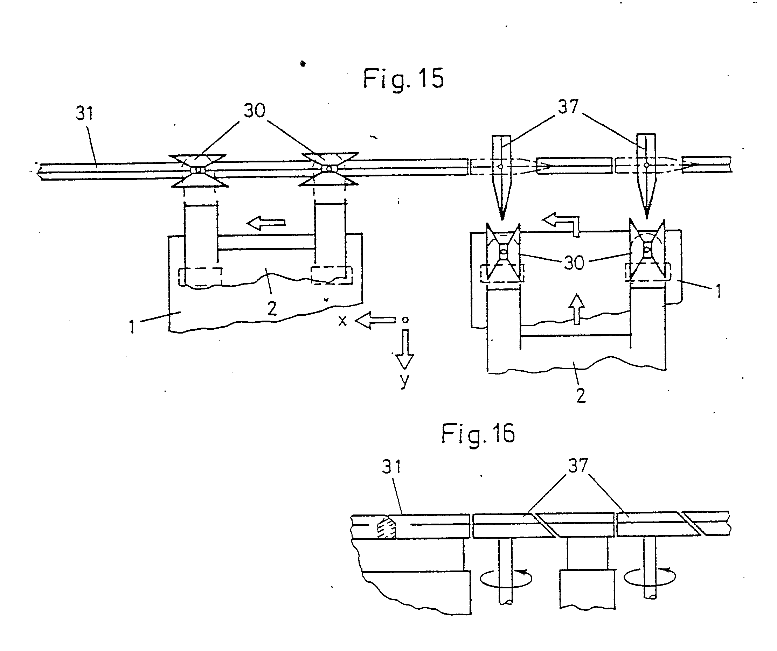

Anhand der Fig. 15 und 16 wird hierzu eine weitere Ausführungsvariante beschrieben. Figur 15 zeigt die Aufsicht auf die Schiene 31, die an mehreren Bearbeitungseinheiten vorbeigeführt ist sowie auf einen Teil der Tragplatte 2 in einer Andock- und einer Verschiebephase. In Fig. 16 ist eine Seitenansicht der Schiene 31 gezeigt. Um die Tragplatte 2 auf einfache Weise auf die Schiene 31 aufzusetzen und damit gleichzeitig in der Höhe zu nivellieren, sind mindestens an einer Stelle schwenkbare Schienenteile 37 vorgesehen. Auch die Führungsrollen 30 sind um eine vertikale Achse schwenkbar an der Tragplatte 2 angeordnet. Mit dem seitlichen Ausfahren wird die Tragplatte auf die Schienenteile 37 aufgeschoben und damit in der Höhe nivelliert. Danach werden die Schienenteile 37 in Schienenrichtung verschwenkt, wodurch die Positionierung in der y-Richtung erfolgt. Die Positionierung in der x-Richtung kann in der bereits beschriebenen Weise durch einen beweglichen Konus erfolgen (vgl. Fig. 4).

Diese Ausführungsvariante ist besonders dann sinnvoll einsetzbar, wenn mehrere Bearbeitungseinheiten längs der Schiene 31 angeordnet sind, so dass mehrere Lastwechsel längs dieser Schiene erfolgen können.

In allen Ausführungsbeispielen hat die vorliegende Erfindung gegenüber dem Stand der Technik den Vorteil erhöhter Sicherheit im Betrieb, da beim Anfahren einer Uebernahmevorrichtung ein durchghender, seitlicher Abstand eingehalten wird und keine seitlich vorstehenden Teile vorhanden sein müssen. Die Tragplatte 2 muss nicht zunächst aus einer angehobenen Fahrstellung in eine abgesenkte Stellung gebracht werden, bevor sie ausnivelliert werden kann. Vielmehr kann die Nivellierung gleichzeitig mit dem seitlichen Ausfahren der Tragplatte 2 und deren Auflaufen über die geneigte Ebene erfolgen. Durch die seitliche Verschiebung der Tragplatte 2 wird zudem die Lücke zwischen Tragplatte und den Einrichtungen für die Palettenübernahme an der Uebergabestation 20 beim Andocken geschlossen, so dass hierzu - anders als im Stand der Technik - kein zusätzlicher Vorgang nach dem Ausnivellieren nötig ist. Schliesslich führt der Umstand, dass der Transport und das Anfahren der Uebergabe 20 nicht bei angehobener Tragplattform erfolgt, zu einer geringeren Transporthöhe gegenüber dem Stand der Technik.

## Ansprüche

1. Positioniervorrichtung zur massgenauen Uebergabe von Werkstücken, mit einem Transportfahrzeug (1), das ein zu positionierendes Tragelement besitzt und mit einer ortsfesten Einrichtung, mit welcher das Tragelement zur Positionierung zusammenwirkt, wobei das Tragelement auf einem Unterteil des Transportfahrzeugs abgestützt und darauf in Richtung gegen die ortsfeste Einrichtung hin ausfahrbar ist und wobei das Tragelement an seiner in der Ausfahrrichtung vorderen Seite eine Positionieranordnung aufweist, mittels welcher es beim Ausfahren an seiner Vorderseite in seiner Lage bezüglich der ortsfesten Einrichtung ausrichtbar ist, dadurch gekennzeichnet, dass das Tragelement (2) beim Ausfahren an seiner Vorderseite über eine Auflaufschräge (4), die an der ortsfesten Einrichtung (20) ausgebildet ist, auf ein bestimmtes Niveau (9) anhebbar ist, und dass das ausfahrbare Tragelement im Bereich seiner der Ausfahrrichtung entgegengesetzten Seite mittels einer Hebevorrichtung (8) auf dem Unterteil des Transportfahrzeugs (1) abgestützt ist, wobei das Tragelement (2) durch die Hebevorrichtung (8) an seiner der Vorderseite gegenüberliegenden Seite im wesentlichen gleichzeitig mit dem seitlichen Ausfahren zur Nivellierung höhenverstellbar ist.

2. Vorrichtung nach Anspruch 1, dadurch gekennzeichnet, dass das Tragelement (2) quer zur Längsachse des Transportfahrzeugs beidseitig seitlich ausfahrbar ist und an beiden in den Ausfahrrichtungen vorderen Seiten je eine Positionieranordnung (3) aufweist, welche beim Ausfahren mit Positioniermitteln (6,7) der ortsfesten Einrichtung (20) auf der jeweiligen Seite zusammenwirkt und dass das Tragelement (2) an beiden Seiten mittels einer Hebevorrichtung (8) abgestützt ist, wobei jeweils nur die in Ausfahrrichtung hinten am Tragelement gelegene Hebevorrichtung (8) zur Höhenverstellung aktiviert ist.

3. Vorrichtung nach Anspruch 1 oder 2, dadurch gekennzeichnet, dass die ortsfeste Einrichtung (20) mindestens eine höhennivellierte Auflage (9;31;35) besitzt, auf welcher das Tragelement (2) in ausgefahrener Stellung an seiner vorderen Seite abstützbar und dort in seiner Höhenlage festlegbar ist.

4. Vorrichtung nach einem der vorangehenden Ansprüche, dadurch gekennzeichnet, dass die ortsfeste Einrichtung (20) mindestens einen Anschlag (6;36) für die Festlegung der Lage des ausgefahrenen Tragelements längs der Ausfahrrichtung aufweist.

5. Vorrichtung nach einem der vorangehenden Ansprüche, dadurch gekennzeichnet, dass die ortsfeste Einrichtung (20) eine Zentriervorrichtung (7;35) für die Festlegung der Lage des ausgefahrenen Tragelements (2) quer zu seiner Ausfahrrichtung aufweist.

6. Vorrichtung nach den Ansprüchen 4 oder 5, dadurch gekennzeichnet, dass die Auflaufschräge (4) an der ortsfesten Einrichtung in Ausfahrrichtung vor dem Anschlag bzw. der Zentriervorrichtung liegt, derart dass das vorderseitige Anheben und das rückseitige Nivellieren des Tragelements vor seiner Lageausrichtung längs und quer zur Ausfahrrichtung beginnt.

7. Vorrichtung nach einem der vorangehenden Ansprüche, dadurch gekennzeichnet, dass am Tragelement ein Sensor zur Lagefeststellung, vorzugsweise ein elektronisches Pendel angeordnet ist, mittels welchem die Höhenverstellung für die Nievellierung steuerbar ist.

8. Vorrichtung nach einem der vorangehenden Ansprüche, dadurch gekennzeichnet, dass die Positionieranordnung (3) am Tragelement an der jeweiligen Vorderseite je zwei auf der Auflaufschräge (4) abrollbare Führungselemente (3;30) besitzt.

9. Vorrichtung nach einem der vorangehenden Ansprüche, dadurch gekennzeichnet, dass an der in der Ausfahrrichtung vorderen Seite am Tragelement (2) Führungsrollen (30) angeordnet sind, die zum Zusammenwirken mit einer schienenartigen Führung (31) der ortsfesten Einrichtung an der ortsfesten Einrichtung bei ausgerichtetem Tragelement (2) ausgebildet sind, längs welcher das Transportfahrzeug zwischen mehreren Uebergabestationen bewegbar ist.

10. Vorrichtung nach Anspruch 9, dadurch gekennzeichnet, dass die schienenartige Führung an mindestens einer Stelle schwenkbare Schienenteile (37) aufweist und dass die Führungsrollen (30) um eine vertikale Achse schwenkbar am Tragelement (2) angeordnet sind, derart, dass das Tragelement über die verschwenkten Schienenteile (37) auf die schienenartige Führung (31) aufsetzbar ist.

Fig. 1

Fig. 2

Fig. 3

Fig. 4

Fig. 5

Fig. 8

Fig. 9

Fig. 6

EP 0 361 179 A2

Fig.7

EP 0 361 179 A2

Fig. 10

Fig. 11

Fig. 12

Fig. 13

Fig. 14

Fig. 15

Fig. 16